# EUROPEAN PATENT APPLICATION

(11) **EP 1 086 933 A2**
(43) Date of publication of application: **28.03.2001**
(21) Application number: 00308328.4
(22) Date of filing: 22.09.2000
(51) Int. Cl.: C04B 24/42

(54) **Cement composition**

(30) Priority: 24.09.1999 JP 26988799
(71) Applicant: Dow Corning Toray Silicone Co., Ltd., Tokyo (JP)
(72) Inventor: Morita, Yoshitsugu, Ichihara-shi, Chiba Prefecture (JP); Uomori, Masahiko, Ichihara-shi, Chiba Prefecture (JP); Kobayashi, Kazuo, Ichihara-shi, Chiba Prefecture (JP)
(74) Representative: Kyle, Diana

(57) **Abstract**

A cement composition comprising in a first embodiment
(A) 100 parts by weight hydraulic cement,
(B) 0.1 part by weight to 50 parts by weight spherical crosslinked silicone particles with an average particle size of from 0.1 µm to 500 µm containing a non-crosslinkable silicone oil, and optionally
(C) aggregate.

In a second embodiment of the present invention a surface active agent is added to the silicone particles either with or without the non-crosslinkable silicone oil. In a third embodiment the silicone particles with or without the addition of the non-crosslinkable silicone oil or surface active agent are provide to the composition as an aqueous suspension.

## Description

The present invention relates to a cement composition containing crosslinked silicone particles, and, more specifically, relates to a cement composition of superior fluidity, which exhibits superior water repellency and resistance to cracking upon hardening. A concrete or mortar composition obtained by compounding a silicone rubber powder with cement for the purpose of imparting water repellency to cured products of concrete or mortar is described in KOKAI Hei 05(1993)-306156. According to the description, the silicone rubber powder is prepared by finely dividing silicone rubber, and a silicone oil can be used in combination therewith. However, the problem with the concrete or mortar composition described in KOKAI Hei 05(1993)-306156 is that the composition lacks fluidity and the water repellency and resistance to cracking of the obtained cured concrete or mortar products are insufficient.

It is an object of the present invention to provide a cement composition with superior fluidity exhibiting superior water repellency and resistance to cracking upon hardening.

The present invention is a cement composition comprising
(A) 100 parts by weight hydraulic cement,
(B) 0.1 part by weight to 50 parts by weight spherical crosslinked silicone particles with an average particle size of from 0.1 µm to 500 µm containing a non-crosslinkable silicone oil, and optionally
(C) aggregate.

In a second embodiment of the present invention a surface active agent is added to the silicone particles either with or without the non-crosslinkable silicone oil. In a third embodiment the silicone particles with or without the addition of the non-crosslinkable silicone oil or surface active agent are provide to the composition as an aqueous suspension.

The present invention in a first embodiment is a cement composition comprising
(A) 100 parts by weight hydraulic cement,
(B) 0.1 part by weight to 50 parts by weight spherical crosslinked silicone particles with an average particle size of from 0.1 µm to 500 µm containing a non-crosslinkable silicone oil, and optionally
(C) aggregate.

The present invention in a second embodiment is a cement composition comprising:
(A) 100 parts by weight hydraulic cement,
(B') 0.1 part by weight to 50 parts by weight spherical crosslinked silicone particles with an average particle size of from 0.1 µm to 500 µm containing a surface active agent, and optionally
(C) aggregate.

The present invention in a third embodiment is a cement composition comprising
(A) hydraulic cement,
(B") an aqueous suspension of spherical crosslinked silicone particles with an average particle size of from 0.1 µm to 500 µm in a quantity such that the amount of the spherical crosslinked silicone particles in component (B") is in the range of from 0.1 part by weight to 50 parts by weight per 100 parts by weight of component (A),
   and optionally
(C) aggregate.

The present cement composition will now be explained in detail. The hydraulic cement of component (A), which is the main component of the present composition, is a component that hardens on standing when mixed with water. A representative example of component (A) is Portland cement, which is prepared, for instance, by adding a cure modifier such as calcium sulfate (gypsum) to a clinker prepared by firing a raw material consisting of iron oxide, quartzite, clay, and lime (CaO) at a high temperature, and then pulverizing the mixture. Examples of Portland cement include early strength Portland cement, ultra-high early strength Portland cement, moderate-heat Portland cement, sulfate-resisting Portland cement, and white Portland cement. Additionally, examples of the hydraulic cement of component (A) other than Portland cement include blast furnace cement, silica cement, fly ash cement, and alumina cement.

The spherical crosslinked silicone particles of component (B), spherical crosslinked silicone particles of component (B'), and the aqueous suspension of component (B") are components that represent a distinctive characteristic of the present composition. These components are used to impart superior water repellency and cracking resistance to cured products of the present composition without decreasing the fluidity of the composition.

The spherical crosslinked silicone particles of component (B) are characterized by containing a non-crosslinkable silicone oil and having an average particle size of from 0.1 µm to 500 µm. Preferably, component (B) has a rubber-like or gel-like consistency, with the rubber-like consistency being especially preferable. The average size of particles of component (B) ranges from 0.1 µm to 500 µm, preferably, from 0.1 µm to 200 µm, even more preferably from 0.1 µm to 100 µm, and especially preferably, from 0.1 µm to 50 µm. This is due to the fact that when the average size of particles of component (B) is below the lower limit of the aforementioned range, the resultant cured cement products tend to fail to exhibit sufficient water repellency, and, on the other hand, when it exceeds the upper limit of the above-mentioned range, then either its dispersibility in the resultant cement composition tends to decrease, or the mechanical strength of the resultant cured cement products tends to decrease.

The non-crosslinkable silicone oil of component (B) is a silicone oil that is contained in the crosslinked silicone particles and naturally leaks from them; otherwise, it can be extracted from them with organic solvents. Oils having linear, partially branched linear, cyclic, or branched molecular structures are suggested as such silicone oils, with oils having linear structures being especially preferable. When spherical crosslinked silicone particles are impregnated with a silicone oil, there are no limitations regarding the type of the oil. However, when a non-crosslinkable silicone oil is introduced in advance into a crosslinkable silicone composition with subsequent cross-linking, examples of oils suggested as such silicone oil include dimethylpolysiloxane with both terminal ends of the molecular chain blocked with trimethylsiloxy groups, copolymer of methylphenylsiloxane and dimethylsiloxane with both terminal ends of the molecular chain blocked with trimethylsiloxy groups, copolymer of methyl(3,3,3-trifluoropropyl)siloxane and dimethylsiloxane with both terminal ends of the molecular chain blocked with trimethylsiloxy groups, and other non-functional silicone oils. When the crosslinkable silicone composition is crosslinked via an addition reaction, examples of such suggested silicone oils, in addition to the above-mentioned non-functional silicone oils, include dimethylpolysiloxane with both terminal ends of the molecular chain blocked with silanol groups and polysiloxane obtained by substituting alkyl groups other than methyl, phenyl, and 3,3,3-trifluoropropyl for some of the methyl groups of the dimethylpolysiloxane, and silicone components remaining unreacted after the crosslinking reaction. When the crosslinkable silicone composition is crosslinked using a condensation reaction, examples of such suggested silicone oils, in addition to the above-mentioned non-functional silicone oils, include silicone oils such as polysiloxanes obtained by substituting alkenyl groups for some of the methyl groups of the silicone oils, and, furthermore, silicone components remaining unreacted after the crosslinking reaction. Although there are no limitations concerning the viscosity of the oil, its viscosity at 25°C should preferably be 1 mPa·s to 100,000 mPa·s, more preferably, 1 mPa·s to 50,000 mPa·s, and even more preferably, 1 mPa·s to 10,000 mPa·s.

The content of the non-crosslinkable silicone oil in component (B) is preferably 1 wt% to 80 wt%, and, even more preferably, 1 wt% to 50 wt%. This is due to the fact that when the content of the non-crosslinkable silicone oil is below the lower limit of the above-mentioned range, the water repellency of the resultant cured cement products tends to decrease, and, on the other hand, in the case of crosslinked silicone particles exceeding the upper limit of the above-mentioned range, their handling properties deteriorate in the absence of additional treatment. The content of the non-crosslinkable silicone oil in component (B) can be determined by extracting it with organic solvents such as toluene and isopropanol.

The spherical crosslinked silicone particles of component (B') are characterized by containing a surface active agent and having an average particle size of from 0.1 µm to 500 µm. Preferably, component (B') has a rubber-like or gel-like consistency with the rubber-like appearance being especially preferable. Also, the average size of particles of component (B') ranges from 0.1 µm to 500 µm, preferably from 0.1 µm to 200 µm, even more preferably from 0.1 µm to 100 µm, and especially preferably from 0.1 µm to 50 µm. This is due to the fact that when the average size of particles of component (B') is below the lower limit of the aforementioned range, the resultant cured cement products tend to fail to exhibit sufficient water repellency, and, on the other hand, when it exceeds the upper limit of the above-mentioned range, then either its dispersibility in the resultant cement composition tends to decrease, or the mechanical strength of the resultant cured cement products tends to decrease.

Examples of the surface active agents of component (B') include polyoxyethylene alkyl ether, polyoxyethylene polyoxypropylene alkyl ether, polyoxyethylene alkyl phenyl ether, polyoxyethylene glycol fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, propylene glycol fatty acid ester, polyethylene glycol, polypropylene glycol, diethylene glycol trimethyl nonanol ethylene oxide adduct, and other nonionic surface active agents; hexylbenzenesulfonic acid, octylbenzenesulfonic acid, decylbenzenesulfonic acid, dodecylbenzenesulfonic acid, cetylbenzenesulfonic acid, myristylbenzenesulfonic acid, or their sodium salts, and other anionic surface active agents; octyl trimethylammonium hydroxide, dodecyl trimethylammonium hydroxide, hexadecyl trimethylammonium hydroxide, octyl dimethylbenzylammonium hydroxide, decyl dimethylbenzylammonium hydroxide, dioctadecyl dimethylammonium hydroxide, beef tallow trimethylammonium hydroxide, coconut oil trimethylammonium hydroxide and other cationic surface active agents, as well as blends of two or more such surface active agents, with nonionic surface active agents being especially preferable.

The content of the surface active agent of component (B') is, preferably, at least 0.1 wt%, even more preferably, it ranges from 0.1 wt% to 20 wt%, and, especially preferably, from 0.1 wt% to 10 wt%. This is due to the fact that when the content of the surface active agent of component (B') is below the lower limit of the above-mentioned range, its dispersibility in the resultant cement composition tends to decrease, and, on the other hand, when it exceeds the upper limit of the above-mentioned range, the water repellency of the resultant cured cement products tends to deteriorate. The content of the surface active agent of component (B') can be determined by extracting the crosslinked silicone particles with organic solvents such as toluene and isopropanol.

Furthermore, it is preferable that, in addition to the surface active agent, component (B') should contain a non-crosslinkable silicone oil. The non-crosslinkable silicone oil is exemplified by the oils mentioned above. For the above-described reasons, the content of the non-crosslinkable silicone oil is, preferably, in the range of from 1 wt% to 80 wt%, and, even more preferably, 1 wt% to 50 wt%.

Furthermore, the aqueous suspension of component (B") is characterized by containing spherical crosslinked silicone particles with an average particle size of from 0.1 µm to 500 µm dispersed in water. Preferably, the suspension of component (B") is obtained, for example, by crosslinking a crosslinkable silicone composition in an emulsified state in water. The crosslinking reaction used for the crosslinkable silicone composition is exemplified by addition reactions, condensation reactions, and organic peroxide-initiated radical reactions, with addition reactions or condensation reactions being especially preferable. Also, in order to stably emulsify the crosslinkable silicone composition in water, it is preferable to use the above-mentioned surface active agents, with the use of nonionic surface active agents being especially preferable. After that, an aqueous suspension of spherical crosslinked silicone particles can be formed by allowing the crosslinkable silicone composition emulsified in water to stand at room temperature or by heating it to carry out the crosslinking of the crosslinkable silicone composition emulsified in water.

Furthermore, the spherical crosslinked silicone particles of component (B") preferably contain a non-crosslinkable silicone oil. The non-crosslinkable silicone oil is exemplified by the oils mentioned above. For the above-described reasons, the content of the non-crosslinkable silicone oil is, preferably, in the range of from 1 wt% to 80 wt%, and, even more preferably, 1 wt% to 50 wt%.

There are no limitations concerning the content of the spherical crosslinked silicone particles in the aqueous suspension of component (B"), but a content of from 10 wt% to 90 wt% is preferable, and that of from 30 wt% to 75 wt% is especially preferable. This is due to the fact that when the content of the spherical crosslinked silicone particles in component (B") is below the lower limit of the above-mentioned range, it becomes more difficult to produce an excellent dispersion of the spherical crosslinked silicone particles in the cured cement products, and, on the other hand, when it exceeds the upper limit of the above-mentioned range, the preparation of the aqueous suspension becomes more difficult.

The spherical crosslinked silicone particles of component (B) or the spherical crosslinked silicone particles of component (B') can be prepared by removing water from the aqueous suspension of component (B"). However, it is possible to produce an excellent dispersion of spherical crosslinked silicone particles in the cement composition if the aqueous suspension of component (B") is used as is.

In the present composition, when the spherical crosslinked silicone particles of component (B) are used, their content is in the range of from 0.1 parts by weight to 50 parts by weight, preferably from 0.1 parts by weight to 30 parts by weight, more preferably from 0.1 parts by weight to 20 parts by weight, and especially preferably from 0.5 parts by weight to 20 parts by weight per 100 parts by weight of the hydraulic cement of component (A). Also, when the spherical crosslinked silicone particles of component (B') are used, their content ranges from 0.1 parts by weight to 50 parts by weight, preferably from 0.1 parts by weight 30 parts by weight, more preferably from 0.1 parts by weight to 20 parts by weight, and especially preferably from 0.5 parts by weight to 20 parts by weight per 100 parts by weight of the hydraulic cement of component (A). Furthermore, when the aqueous suspension of component (B") is used, its quantity is such that the content of the spherical crosslinked silicone particles in component (B") ranges from 0.1 parts by weight to 50 parts by weight, preferably from 0.1 parts by weight to 30 parts by weight, more preferably from 0.1 parts by weight to 20 parts by weight, and especially preferably, from 0.5 parts by weight to 20 parts by weight per 100 parts by weight of the hydraulic cement of component (A). This is due to the fact that when the content of component (B), component (B'), or component (B") is below the lower limit of the above-mentioned range, the resultant cured cement products tend to fail to exhibit sufficient water repellency, and, on the other hand, when it exceeds the upper limit of the above-mentioned range, then the mechanical strength of the resultant cured cement products tends to decrease.

Also, in the present composition, the aggregate of component (C) is a component that is added as needed. If the present composition is a mortar composition, component (C) is a fine aggregate, such as sand, for example, river sand, pit sand, mountain sand, or quartz sand; and if the present composition is a concrete composition, component (C) is a fine aggregate, such as sand, or a coarse aggregate, such as river gravel, pit gravel, or crushed rock. Additionally, hemihydrate gypsum, slaked lime, calcium carbonate, dolomite plaster, clay, volcanic ash, and other non-aggregates, as well as organic polymer emulsions, latexes, fibers, and water-soluble high polymers can be added as optional components to the present composition.

The present cement composition can be cured by the addition of water. At such time, the amount of the added water is preferably from 10 parts by weight to 100 parts by weight relative to the weight of the hydraulic cement of component (A). As concerns the method used for mixing the above-mentioned components and water, it is preferable to use a mixer, such as a cement mixer. In particular, in the process of mixing the above-mentioned components, an excellent dispersion of the spherical crosslinked silicone particles in the cement composition can be produced when the aqueous suspension of component (B") is used.

### Application Examples

The present cement compositions are explained in detail by referring to the following application examples. In the examples the viscosities given are those measured at 25°C.

Reference Example 1. A silicone composition was prepared by uniformly mixing 75.2 parts by weight of a dimethylpolysiloxane with a viscosity of 400 mPa·s having both terminal ends of the molecular chain blocked with dimethylvinylsiloxy groups, 4.8 parts by weight of a copolymer of methylhydrogensiloxane and dimethylsiloxane with a viscosity of 50 mPa·s having both terminal ends of the molecular chain blocked with trimethylsiloxy groups, and 20 parts by weight of a dimethylpolysiloxane with a viscosity of 50 mPa·s having both terminal ends of the molecular chain blocked with trimethylsiloxy groups. The silicone composition was quickly mixed with 50 parts by weight of a 1wt% aqueous solution of polyoxyethylene (9 moles adducted) nonyl phenyl ether, after which the mixture was emulsified in a colloid mill, preparing an emulsion of the silicone composition.

Next, a separately prepared aqueous emulsion of platinum catalyst, whose main ingredient was a 1,3-divinyltetramethyldisiloxane complex of platinum and in which 1,3-divinyltetramethyldisiloxane was used as a solvent (average particle size of platinum catalyst = 0.05 µm, platinum metal concentration = 0.05 wt%), was mixed therewith in an amount which provided a content of platinum metal by weight of 20 ppm relative to the total weight of the organopolysiloxane component in the above-mentioned emulsion. Subsequently, a 67 wt% aqueous suspension of silicone rubber particles was prepared by allowing the emulsion to stand at 35°C for 24 hours, thereby bringing about the crosslinking of the silicone composition emulsified in water via a hydrosilylation reaction. Measurements performed using a laser particle size analyzer (LA-500 from Horiba, Ltd.) revealed that the average particle size of the silicone particles in the suspension was 4 µm and the maximum particle size was 20 µm.

Next, silicone rubber particles were obtained by drying the above-mentioned suspension by atomizing it in hot air in a spray-dryer. Observation of the silicone rubber particles through an electron microscope revealed that they were spherical in shape. In addition, extraction of the silicone rubber particles with toluene showed that in the silicone rubber particles, polyoxyethylene nonyl phenyl ether was contained in an amount of 0.5 wt% and dimethylpolysiloxane with a viscosity of 50 mPa·s having both terminal ends of the molecular chain blocked with trimethylsiloxy groups was contained in an amount of 20 wt%.

Reference Example 2. With the exception of using 20 parts by weight of a dimethylpolysiloxane with a viscosity of 100 mPa·s having both terminal ends of the molecular chain blocked with trimethylsiloxy groups instead of 20 parts by weight of the dimethylpolysiloxane with a viscosity of 50 mPa·s having both terminal ends of the molecular chain blocked with trimethylsiloxy groups, a 67 wt% aqueous suspension of silicone rubber particles was prepared in the same manner as in Reference Example 1.

Measurements carried out using a laser particle size analyzer in the same manner as in Reference Example 1 revealed that the average particle size of the silicone particles in the suspension was 4 µm and the maximum particle size was 20 µm. Also, silicone rubber particles were obtained by drying part of the suspension by atomizing it in hot air in a spray-dryer. Observation of the silicone rubber particles through an electron microscope revealed that they were spherical in shape. In addition, extraction of the silicone rubber particles with toluene showed that polyoxyethylene nonyl phenyl ether was contained in an amount of 0.5 wt% and the dimethylpolysiloxane with a viscosity of 100 mPa·s having both terminal ends of the molecular chain blocked with trimethylsiloxy groups was contained in an amount of 20 wt%.

Reference Example 3. A silicone composition was prepared by uniformly mixing 94 parts by weight of a dimethylpolysiloxane with a viscosity of 400 mPa·s having both terminal ends of the molecular chain blocked with dimethylvinylsiloxy groups and 6 parts by weight of a copolymer of methylhydrogensiloxane and dimethylsiloxane with a viscosity of 50 mPa·s having both terminal ends of the molecular chain blocked with trimethylsiloxy groups. The silicone composition was quickly mixed with 100 parts by weight of a 0.8 wt% aqueous solution of polyoxyethylene (9 moles adducted) nonyl phenyl ether and then the mixture was emulsified in a colloid mill, after which 200 parts by weight of water was added thereto, preparing an emulsion of the silicone composition.

Next, a separately prepared aqueous emulsion of platinum catalyst, whose main ingredient was a 1,3-divinyltetramethyldisiloxane complex of platinum and in which 1,3-divinyltetramethyldisiloxane was used as a solvent (average particle size of platinum catalyst = 0.05 µm, platinum metal concentration = 0.05 wt%), was mixed with the above-mentioned emulsion in an amount which provided a content of platinum metal of 20 ppm by weight relative to the total weight of the organopolysiloxane component in the above-mentioned emulsion. Subsequently, a 25 wt% aqueous suspension of silicone rubber particles was prepared by allowing the emulsion to stand at 35°C for 24 hours, thereby bringing about the crosslinking of the silicone composition emulsified in water by means of a hydrosilylation reaction. Measurements performed using a laser particle size analyzer in the same manner as in Reference Example 1 revealed that the average particle size of the silicone particles in the suspension was 4 µm and the maximum particle size was 20 µm.

Next, silicone rubber particles were obtained by drying the above-mentioned suspension by atomizing it in hot air in a spray-dryer. Observation of the silicone rubber particles through an electron microscope revealed that they were spherical in shape. In addition, extraction of the silicone rubber particles with toluene showed polyoxyethylene nonyl phenyl ether was contained in an amount of 0.5 wt%.

Reference Example 4. A silicone rubber composition was prepared by uniformly mixing 94 parts by weight of a dimethylpolysiloxane with a viscosity of 400 mPa·s having both terminal ends of the molecular chain blocked with dimethylvinylsiloxy groups, 6 parts by weight of a copolymer of methylhydrogensiloxane and dimethylsiloxane with a viscosity of 50 mPa·s having both terminal ends of the molecular chain blocked with trimethylsiloxy groups, as well as platinum catalyst (platinum metal concentration = 1 wt%) consisting of a solution of 1,3-divinyltetramethyldisiloxane, whose main ingredient was a 1,3-divinyltetramethyldisiloxane complex of platinum, in an amount such that the content of platinum metal was 20 ppm by weight relative to the total weight of the above-mentioned organopolysiloxane. A silicone rubber sheet was fabricated by heating the silicone rubber composition in an oven at 100°C for 1 hour. The Type A durometer hardness of the silicone rubber sheet as determined in accordance with JIS K 6253 was 30. Next, the silicone rubber sheet was milled into powder in a stone grist mill, preparing silicone rubber particles of irregular shape with an average particle size of about 1 mm.

Reference Example 5. A 67 wt% aqueous emulsion of silicone oil was prepared by quickly mixing 100 parts by weight of a dimethylpolysiloxane with a viscosity of 100 mPa-s having both terminal ends of the molecular chain blocked with trimethylsiloxy groups with 50 parts by weight of a 1.5 wt% aqueous solution of polyoxyethylene (9 moles adducted) nonyl phenyl ether, followed by emulsifying the mixture in a colloid mill. Measurements performed using a laser particle size analyzer in the same manner as in Reference Example 1 revealed that the average particle size of the silicone oil in the emulsion was 0.5 µm and the maximum particle size was 10 µm.

Application Example 1. A cement composition was prepared by mixing at room temperature 100 parts by weight of Portland cement (from Chuo Chemical Co., Inc.), 300 parts by weight of Toyoura sand, 5 parts by weight of the spherical silicone rubber particles prepared in Reference Example 1, 20 parts by weight of a styrene-butadiene rubber emulsion (TOMAK Super from Japan Latex Industry Co., Ltd.) with a solid matter content of 45 wt%, and water in a quantity sufficient to bring the water content of the resultant cement composition to 50 wt%. The flow of the cement composition was subjected to measurement in accordance with JIS R 5201-1992 (Physical testing methods for cement). The results are shown in Table 1.

Next, a cured cement article was formed by casting the above-described cement composition in a form and allowing it to harden for 1 day in warm water at 70°C in accordance with JCI-SSE4 (accelerated strength testing method using warm water at 70°C), and additionally by curing it by drying for 7 days in air at 20°C with an RH (relative humidity) value of 50%. The characteristics of the cured article were measured in the following manner.
- Air content: calculated by subtracting from 100% the ratio (%) of the unit volume weight of the prepared cured cement article to the unit volume weight of an ideal cured cement article having no voids.
- Chloride ion penetration depth: the four sides of a 40 mm × 40 mm × 80 mm cured cement article other than the two sides in contact with the form were sealed with an epoxy resin-based coating material. After immersing the cured cement article into a 2.5% sodium chloride solution (20°C) for seven days its weight increase was calculated as a percentage.
- Neutralization depth: the four sides of a 40 mm × 40 mm × 80 mm cured cement article other than the two sides in contact with the form were sealed with an epoxy resin-based coating material. After allowing the cured cement article to stand in an accelerated neutralization tester (30°C, RH: 60%, CO₂ concentration: 5%) for 14 days, the cured article was broken in two, and the surface of the cleft was sprayed with a 1 % alcohol solution of phenolphthalein. The portion that did not turn red was considered to be the neutralized region, and its depth was measured using calipers.
- Coefficient of water absorption: determined in accordance with JIS A 6203-1980 (Polymer Dispersions for Cement Compounding). A 40 mm × 40 mm × 160 mm cured cement article was dried in a dryer (80°C) until its weight stabilized, whereupon it was immersed in water (20°C). The percentage of weight increase after 48 hours of immersion was calculated based on the weight prior to the immersion.
- Strength: the flexural strength and compressive strength of a 40 mm × 40 mm × 160 mm cured cement article were measured in accordance with JIS R 5201-1992 (Physical testing methods for cement).

Application Example 2. A cement composition was prepared by mixing, at room temperature, 100 parts by weight of Portland cement (from Chuo Chemical Co., Inc.), 300 parts by weight of Toyoura sand, 7.7 parts by weight of the spherical silicone rubber particles prepared in Reference Example 2, 20 parts by weight of a styrene-butadiene rubber emulsion (TOMAK Super from Japan Latex Industry Co., Ltd.) with a solid matter content of 45 wt%, and water in a quantity sufficient to bring the water content of the resultant cement composition to 50 wt%. The flow of the cement composition was measured in the same manner as in Application Example 1. The results are shown in Table 1. Next, the above-described cement composition was cured in the same manner as in Application Example 1 to form a cured cement article. The characteristics of the cured cement article were measured in the same manner as in Application Example 1. The results are shown in Table 1.

Application Example 3. A cement composition was prepared by mixing at room temperature 100 parts by weight of Portland cement (from Chuo Chemical Co., Inc.), 300 parts by weight of Toyoura sand, 15 parts by weight of the spherical silicone rubber particles prepared in Reference Example 3, 20 parts by weight of a styrene-butadiene rubber emulsion (TOMAK Super from Japan Latex Industry Co., Ltd.) with a solid matter content of 45wt%, and water in a quantity sufficient to bring the water content of the resultant cement composition to 50 wt%. The flow of the cement composition was measured in the same manner as in Application Example 1. The results are shown in Table 1. Next, the above-described cement composition was cured in the same manner as in Application Example 1 to form a cured cement article. The characteristics of the cured cement article were measured in the same manner as in Application Example 1. The results are shown in Table 1.

Application Example 4. A cement composition was prepared by mixing at room temperature 100 parts by weight of Portland cement (from Chuo Chemical Co., Inc.), 300 parts by weight of Toyoura sand, 5 parts by weight of the spherical silicone rubber particles prepared in Reference Example 3, 20 parts by weight of a styrene-butadiene rubber emulsion (TOMAK Super from Japan Latex Industry Co., Ltd.) with a solid matter content of 45 wt%, and water in a quantity sufficient to bring the water content of the resultant cement composition to 50 wt%. The flow of the cement composition was measured in the same manner as in Application Example 1. The results are shown in Table 1. Next, the above-described cement composition was cured in the same manner as in Application Example 1 to form a cured cement article. The characteristics of the cured cement article were measured in the same manner as in Application Example 1. The results are shown in Table 1.

Comparative Example 1. A cement composition was prepared by mixing at room temperature 100 parts by weight of Portland cement (from Chuo Chemical Co., Inc.), 300 parts by weight of Toyoura sand, 20 parts by weight of a styrene-butadiene rubber emulsion (TOMAK Super from Japan Latex Industry Co., Ltd.) with a solid matter content of 45 wt%, and water in a quantity sufficient to bring the water content of the resultant cement composition to 50 wt%. The flow of the cement composition was measured in the same manner as in Application Example 1. The results are shown in Table 1. Next, the above-described cement composition was cured in the same manner as in Application Example 1 forming a cured cement article. The characteristics of the cured cement article were measured in the same manner as in Application Example 1. The results are shown in Table 1.

Comparative Example 2. A cement composition was prepared by mixing at room temperature 100 parts by weight of Portland cement (from Chuo Chemical Co., Inc.), 300 parts by weight of Toyoura sand, 5 parts by weight of the silicone rubber particles prepared in Reference Example 4, 20 parts by weight of a styrene-butadiene rubber emulsion (TOMAK Super from Japan Latex Industry Co., Ltd.) with a solid matter content of 45 wt%, and water in a quantity sufficient to bring the water content of the resultant cement composition to 50 wt%. The flow of the cement composition was measured in the same manner as in Application Example 1. The results are shown in Table 1. Next, the above-described cement composition was cured in the same manner as in Application Example 1 forming a cured cement article. The characteristics of the cured cement article were measured in the same manner as in Application Example 1. The results are shown in Table 1.

Comparative Example 3. A cement composition was prepared by mixing at room temperature 100 parts by weight of Portland cement (from Chuo Chemical Co., Inc.), 300 parts by weight of Toyoura sand, 7.7 parts by weight of the silicone oil emulsion prepared in Reference Example 5, 20 parts by weight of a styrene-butadiene rubber emulsion (TOMAK Super from Japan Latex Industry Co., Ltd.) with a solid matter content of 45 wt%, and water in a quantity sufficient to bring the water content of the resultant cement composition to 50 wt%. The flow of the cement composition was measured in the same manner as in Application Example 1. The results are shown in Table 1. Next, the above-described cement composition was cured in the same manner as in Application Example 1 forming a cured cement article. The characteristics of the cured cement article were measured in the same manner as in Application Example 1. The results are shown in Table 1.

**Table 1**

| Example | App. | App. | App. | App. | Comp. | Comp. | Comp. |
|---|---|---|---|---|---|---|---|
| Item | Ex. 1 | Ex. 2 | Ex. 3 | Ex. 4 | Ex. 1 | Ex. 2 | Ex. 3 |
| Flow (cm) | 160 | 166 | 148 | 150 | 155 | 124 | 170 |
| Air content (%) | 4.8 | 4.3 | 4.3 | 5.5 | 8.3 | 9.5 | 6.2 |
| Chloride ion penetration depth (mm) | 2.3 | 1.5 | 2.8 | 3.3 | 5.4 | 6.2 | 4.7 |
| Neutralization depth (mm) | 3.1 | 2.7 | 2.0 | 3.2 | 5.0 | 5.2 | 3.3 |
| Coefficient of water absorption (%) | 1.6 | 1.5 | 0.8 | 1.6 | 2.2 | 1.8 | 1.5 |
| Flexural strength (kgf/cm²) | 118 | 120 | 121 | 112 | 110 | 95 | 100 |
| Compressive strength (kgf/cm²) | 375 | 382 | 378 | 368 | 365 | 321 | 235 |

## Claims

1. A cement composition comprising:
(A) 100 parts by weight hydraulic cement,
(B) 0.1 part by weight to 50 parts by weight spherical crosslinked silicone particles with an average particle size of from 0.1 µm to 500 µm containing a non-crosslinkable silicone oil and/or a surface active agent, and optionally
(C) aggregate.

2. The cement composition according to claim 1, wherein component (B) comprises spherical crosslinked silicone particles containing from 1 wt% to 80 wt% non-crosslinkable silicone oil.

3. The cement composition according to claim 1 or 2, wherein the surface active agent of component (B) is a nonionic surface active agent.

4. The cement composition according to claim 1 or 3, wherein component (B) comprises spherical crosslinked silicone particles containing at least 0.1 wt% surface active agent.

5. A cement composition comprising:
(A) hydraulic cement,
(B') an aqueous suspension of spherical crosslinked silicone particles with an average particle size of from 0.1 µm to 500 µm in a quantity such that the amount of the spherical crosslinked silicone particles in component (B') is in a range of from 0.1 part by weight to 50 parts by weight per 100 parts by weight of component (A),
and optionally
(C) aggregate.

6. The cement composition according to claim 5, wherein component (B') is an aqueous suspension obtained by crosslinking a crosslinkable silicone composition in an emulsified state in water.

7. The cement composition according to claim 5 to 6, wherein the crosslinked silicone particles of component (B) contain a non-crosslinkable silicone oil.

8. A cement composition according to any of claims 1 to 7, wherein the silicone particles have an average particle size of from 0.1 µm to 50 µm.

9. A cement composition according to any of claims 1 to 4, 7 and 8, wherein the non-crosslinkable silicone oil has a linear structure.

10. A cement composition according to claim 9, wherein the non-crosslinkable silicone oil is a dimethylpolysiloxane with both terminal ends of the molecular chain blocked with trimethylsiloxy groups.

11. A cement composition according to any of claims 1 to 4 and 7 to 10, wherein the non-crosslinkable silicone oil has a viscosity of 1 mPa·s to 10,000 mPa·s at 25°C.

12. A cement composition according to any of claims 1 to 4 and 7 to 11, wherein the silicone particles contain 1 wt% to 80 wt% of the non-crosslinkable silicone oil.

13. A cement composition according to any of claims 1 to 12, comprising 0.5 parts by weight to 20 parts by weight of the spherical crosslinked silicone particles.

14. A cement composition according to any of claims 1 to 13, comprising 0.1 wt% to 10 wt% of the surface active agent.
